# FASCICULE DE BREVET EUROPEEN

(11) **EP 1 388 553 B1**
(45) Date de publication et mention de la délivrance du brevet: **27.02.2008**
(21) Numéro de dépôt: 03291818.7
(22) Date de dépôt: 23.07.2003
(51) Int. Cl.: C08G 63/00, B32B 27/36

(54) **Utilisation d'une structure à base de poly(diméthylcétène) et objects comprenant cette structure**
Verwendung einer Struktur auf der Basis von Dimethylketen und diese Struktur enthaltende Gegenstände
Use of a structure based on poly (dimethyl ketene) and objects containing said structure

(30) Priorité: 02.08.2002 FR 0209860
(43) Date de publication de la demande: 11.02.2004
(73) Titulaire: ARKEMA FRANCE, 92700 Colombes (FR)
(72) Inventeur: Brule, Benoît, 27300 Bernay (FR); Linemann, Reinhard, 27300 Bernay (FR)
(74) Mandataire: Mouttet, Marie-Paule

(56) Documents cités:
- FR-A- 2 786 190
- GB-A- 987 370
- SUGIMOTO H ET AL: "LANTHANOID ALKOXIDE AS A NOVEL INITIATOR FOR THE SYNTHESIS OF POLYESTER VIA POLYMERIZATION OF KETENES" MACROMOLECULAR CHEMISTRY AND PHYSICS, WILEY VCH, WEINHEIM, DE, vol. 199, no. 8, 1 août 1998 (1998-08-01), pages 1651-1655, XP000785420 ISSN: 1022-1352

## Description

La présente invention concerne l'utilisation d'un polymère (A) issu de la polymérisation du diméthylcétène pour fabriquer des objets en contact direct avec l'eau ou utilisés en atmosphère humide avec une humidité relative supérieure à 50% et les objets eux-même.

La formule du diméthylcétène (abrégé par DMK) est la suivante :

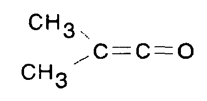

L'existence d'une double liaison carbone-carbone et carbone-oxygène permet, selon les conditions de polymérisation, d'ouvrir sélectivement l'une ou l'autre de ces doubles liaisons. La polymérisation de ce monomère peut donc donner deux unités structurales différentes : 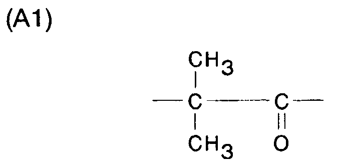 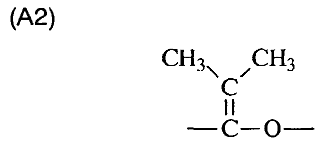 L'enchaînement régulier tête à queue des unités (A1) conduit à des polymères de structure β-cétonique et l'enchaînement tête à queue des unités (A2) conduit à des polymères de structure de type polyacétal vinylique. L'addition alternée des deux unités (A1 ) et (A2) conduit à une structure polyester vinylique : 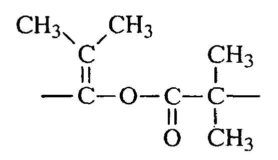 Le polymère (A) utilisé dans l'invention est tel que le rapport molaire A2 / (A1 + A2) est compris entre 0 et 30 % ce qui signifie que le polymère (A) contient de 70 à 100% en moles de motifs (A1) et de 30 à 0% en moles de motifs (A2). On parle alors de polydiméthylcétone, les unités cétoniques étant majoritaires dans le polymère.

Il est très intéressant dans l'industrie de l'emballage en générale et de l'industrie de l'emballage alimentaire en particulier de disposer d'un matériau insensible à l'humidité, imperméable à l'eau et ne gonflant pas en milieu aqueux ou humide par absorption d'eau. En effet, l'emballage alimentaire peut contenir des boissons ou des aliments contenant en grande partie de l'eau mais peut aussi subir des traitements de type stérilisation, pasteurisation au cours du procédé de conditionnement. D'autre part, l'imperméabilité à l'eau ou à la vapeur d'eau de l'emballage peut être utilisée pour protéger un contenu sensible à l'eau vis à vis d'une atmosphère extérieure humide. Ceci est particulièrement intéressant pour l'emballage de produits des secteurs biscuiterie, viennoiserie, boulangerie sensibles à l'humidité dans le cadre de l'emballage alimentaire et de produits chimiques anhydres dans le cadre de l'emballage technique.

Jusqu'à présent les emballages sont réalisés à l'aide d'une structure multicouche polyoléfine/liant /EVOH/liant/polyoléfine. Dans cette structure, l'EVOH sert de barrière aux gaz, en particulier à l'oxygène, et les couches de polyoléfines (polyéthylène ou polypropylène) permettent de protéger l'EVOH de l'eau, l'EVOH perdant ses propriétés barrières en présence d'eau ou d'humidité. Cette structure présente l'inconvénient de comprendre plusieurs couches pour être efficace. La demanderesse a maintenant trouvé qu'il était possible de réaliser des emballages à l'aide d'une structure monocouche de type polydiméthylcétone présentant toutes les propriétés requises pour une utilisation en milieu humide ou aqueux : imperméable ou barrière à l'eau, insensible à l'eau (les propriétés physiques et mécaniques restent constantes en présence d'eau), n'absorbant pas l'eau et barrière à l'oxygène quelque soit le taux d'humidité du milieu.

L'art antérieur FR 2786190 de la demanderesse décrit les propriétés barrières aux gaz, aux hydrocarbures et aux essences des films en polydiméthylcétone. Il est également démontré dans ce document que la propriété barrière à l'oxygène du polydiméthylcétone est peu sensible à l'humidité relative contrairement à celle de l'EVOH. Mais si ce polymère est dans l'art antérieur utilisé pour sa tenue en milieu hydrophobe (c'est à dire en présence d'hydrocarbures, d'essences), rien ne pouvait laisser présager de ses qualités en présence de milieux aqueux ou humides.

Le polydiméthylcétone est un polymère de choix pour bon nombre d'applications impliquant un contact direct avec un milieu aqueux ou humide. Il est particulièrement utile pour fabriquer des emballages, comprenant au moins une couche de polydiméthylcétone, destinés à contenir de l'eau ou des liquides hydrophiles (par exemple bière, soda, jus de fruits, lait, laitage) ou des aliments contenant par définition de l'eau.

L'invention a pour objet l'utilisation d'une structure pour fabriquer des emballages alimentaires ou techniques fermés hermétiquement en contact direct avec un milieu aqueux ou humide, ladite structure comprenant au moins une couche d'un polymère (A) en contact direct avec le milieu le plus humide, celui-ci se trouvant situé à l'intérieur de l'emballage lorsque ce dernier contient de l'eau ou un produit humide ou aqueux et le milieu le plus humide se trouvant situé à l'extérieur de l'emballage lorsque ce dernier contient un produit sec ou à protéger de l'humidité, le polymère (A) comprenant les motifs : 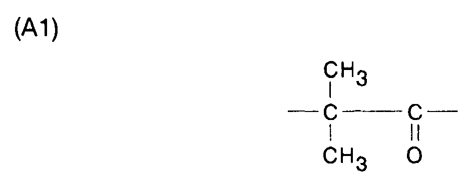 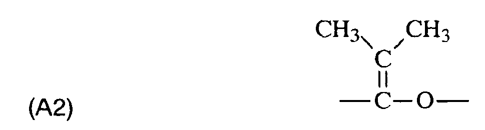 le rapport molaire A2 / (A1 +A2) étant compris entre 0 et 30 %.

L'invention concerne également un objet en contact direct avec un milieu aqueux ou humide, comprenant une structure comprenant au moins une couche d'un polymère (A) en contact direct avec le milieu le plus humide, celui-ci se trouvant situé à l'intérieur de l'emballage lorsque ce dernier contient de l'eau ou un produit humide ou aqueux et le milieu le plus humide se trouvant situé à l'extérieur de l'emballage lorsque ce dernier contient un produit sec ou à protéger de l'humidité, le polymère (A) comprenant les motifs 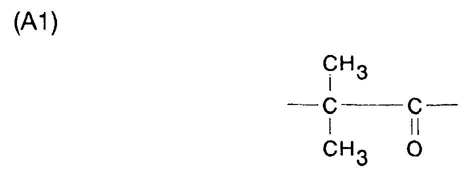 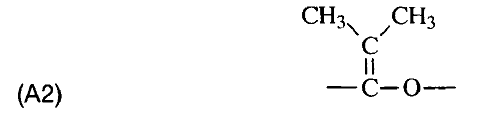 le rapport molaire A2 / (A1 +A2) étant compris entre 0 et 30 %.

Selon un mode de réalisation, le rapport molaire A2 / (A1+A2) est de préférence compris entre 5 et 15%.

Selon un mode de réalisation, l'objet comprend une structure multicouche comprenant en plus de la couche de polymère (A), au moins une couche d'un polymère (B), un liant pouvant être disposé entre les couches de polymères (A) et (B).

Selon un mode de réalisation l'objet est caractérisé en ce que c'est un emballage alimentaire tel qu'une barquette, un sachet, une bouteille et une bonbonne ou un emballage technique tel qu'un tuyau, un conteneur et un fût.

L'invention va maintenant être décrite plus en détails.

L'invention concerne l'utilisation d'une structure utilisée pour fabriquer un emballage, cette structure étant majoritairement monocouche c'est à dire que l'on a une seule couche de polymère et que ce polymère est (A).

La structure peut accessoirement être multicouche, c'est-à-dire comprendre au moins une couche du polymère (A) et au moins une couche de polymère (B), un liant pouvant être disposé entre les couches de polymères (A) et (B). Ce qui a été dit dans le cas de la structure monocouche est également applicable à la structure multicouche, la couche (B) pouvant se trouver indifféremment d'un côté ou de l'autre de la couche de polymère (A) même si, de préférence, le milieu le plus aqueux ou humide est en contact direct avec la couche de polymère (A) dans l'emballage.

La couche de polymère (A) est de préférence au contact direct du milieu le plus aqueux ou humide dans le cas d'une structure multicouche.

Il existe alors deux cas :
- soit on emballe un produit humide ou aqueux et on empêche ainsi les échanges d'eau de l'intérieur vers l'extérieur de l'emballage,
soit on emballe un produit sec ou craignant l'humidité et on évite ainsi les échanges d'eau de l'extérieur vers l'intérieur de l'emballage.

La présente invention concerne aussi les objets fabriqués avec l'une quelconque des structures mono ou multicouches précédentes, en particulier les objets en contact direct avec un milieu aqueux ou humide (Humidité Relative, RH>50%). Ces objets peuvent être de façon générale des emballages contenant un milieu aqueux ou à protéger de l'humidité et plus particulièrement des emballages alimentaires ou des emballages techniques.

Les emballages alimentaires sont par exemple des bouteilles, des barquettes, des bonbonnes, des sacs et des sachets qu'on obtient avec lesdites structures mono ou multicouches se présentant sous forme de films mono ou multicouches.

Les emballages techniques sont par exemple des conteneurs ou des fûts pour l'industrie chimiques pour éviter les échanges de molécules d'eau de part et d'autre de la paroi du conteneur ou par exemple des tuyaux de chauffage incorporés dans les sols ou les murs des logements. Dans ces tuyaux, le polymère (A) forme la couche interne en contact direct avec l'eau de chauffage dans le cas d'un tuyau à structure multicouche ou alors le tuyau ne comporte qu'une seule couche faite en polymère (A) et en contact direct avec l'eau de chauffage et avec le milieu extérieur au tuyau.

Le polymère (A) va maintenant être décrit en détails.

Le diméthylcétène peut être obtenu par la pyrolyse de l'anhydride isobutyrique. Cette synthèse a été décrite dans les brevets GB 965762, FR 1381831 et US 3201474. Elle a été aussi décrite dans les articles suivants :
· M. Mugno, M. Bornengo, Chim. Ind. (Milan 46,1,5-9, 1964
· G.F. Pregaglia, M. Binaghi, Makromol. Syn., 3, 150-160, 1968.

Cette pyrolyse peut s'effectuer entre 550°C et 675°C sous une pression absolue comprise entre 30 et 40 mmHg (3960 et 5280 Pa).

La polymérisation du diméthylcétène pour obtenir le polymère (A) peut s'effectuer en présence d'un catalyseur de formule Al(R1)₃₋ₘXₘ dans laquelle
X est un atome d'halogène
R1 désigne un groupe alkyl, aryl, cycloalkyl ou alkoxy ou un atome d'hydrogène.

A titre d'exemples on peut citer AlCl₂ C₂H₅ ; AlCl(C₂H₅)₂; AlC₆H₅Cl₂; Al(OC₃H₇)Br₂; AlBr₃; AlCl₃; ou leurs dimères ou les sesquihalogènures du type Al C₂H₅ Cl₂. Al(C₂H₅)₂ Cl.

On peut aussi utiliser un autre catalyseur tel qu'un composé organométallique d'un métal de la deuxième colonne de la table des éléments ou les complexes de ces composés avec des éthers. On peut citer par exemple les dialkylberyllium, les alkylberylliummonohalogenures, les dialkylmagnesium, les alkylmagnesiummonohalogenures, les dialkyl de zinc et les alkyl de zinc monohalogènures. La polymérisation peut être effectuée entre -100°C et +40°C éventuellement en présence d'un solvant pourvu que le solvant ne réagisse pas avec le monomère et ne décompose pas le catalyseur. A titre d'exemple on peut citer les hydrocarbures aliphatiques, cycliques ou aromatiques et les solvants ayant une constante diélectrique élevée tels que le nitrobenzène, le dichlorométhane, le 1,1,1,2 tétrachloroéthane et le 1,1 dichloroéthylène. Cette polymérisation est aussi décrite dans GB 987370 et GB 893908. Elle est aussi décrite dans les articles suivants :
· G.F.Pregaglia, M. Peraldo, M. Binaghi, Gazz. Chim. Ital., 92,488-500,1962.
· G.F.Pregaglia, M.Binaghi, Makromol. Syn., 3, 150-165, 1968.
· G. Natta, G. Mazzanti, GF. Pregaglia, M. Binaghi, M. Peraldo, J. Am. Chem. Soc., Vol.82, 4742-4743, 1960.

La proportion de A2 dans le polymère (A) dépend des conditions de polymérisation en particulier de la polarité du solvant. Cette proportion est importante pour les qualités techniques du polymère (A) notamment vis à vis de l'eau.

La proportion de A2 est habituellement (en moles) de 5 à 15 %.

Le polymère (A) est thermoplastique et a les propriétés suivantes :
- dégradation thermique : début de dégradation à partir de 300°C sans stabilisant obtenu par thermogravimétrie à 10°C/mn.
- densité : 1,28
- températures de fusion à 230 et 255°C, pic mesuré par analyse enthalpique différentielle (20°C / min sous azote).
- viscosité inhérente en solution à 20°C : de 0,5 à 3 (pour une solution à 0,5 g/dl dans le métacrésol).

On peut mettre en film le polymère (A) par les moyens habituels des thermoplastiques tels que soufflage de gaine, pressage, calandrage, extrusion en filière plate. Les corps creux en polymère (A) peuvent être produits par extrusion (pour les tubes), extrusion soufflage (pour les corps creux).

S'agissant des structures multicouches, le polymère (B) peut être par exemple choisi parmi les polyoléfines, les polystyréniques, les polyamides, le polycarbonate, le PVC, le PVDF et les polyesters saturés tel que le PET et le PBT.

A titre d'exemple on peut citer les structures :
(A) / PA-6 ; (A) / (PA-6.6) ; (A) / (PA-6/6.6); (A) / PA-11 ; (A) / PA-12 ; (A) / PE ; (A) / polypropylène.

S'agissant de films souples pour faire des sachets, ces structures ont par exemple des épaisseurs respectives 5 à 30 µm / 15 à 100 µm.

S'agissant des tubes coextrudés, les épaisseurs peuvent être 5 à 10000 µm / 0,5 à 5 mm.

S'agissant des corps creux, les épaisseurs sont fonction du volume et peuvent être de plusieurs millimètres. Il est recommandé de disposer un liant entre les couches (A) et (B).

A titre d'exemple de liant, on peut citer :
- le polyéthylène, le polypropylène, les copolymères de l'éthylène et d'au moins une alpha-oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

On peut aussi ajouter à l'une ou à chacune des couches un produit qui améliore leur adhésion sans devoir utiliser une couche de liant. Ce produit peut être le liant décrit ci-dessus.

Nous allons maintenant à l'aide d'exemples et de comparatifs illustrer les propriétés du polymère (A). Pour montrer ses propriétés d'imperméabilité à l'eau, on fabrique tout d'abord des films monocouches de 50 µm d'épaisseur avec des polymères différents du polymère (A) (comparatifs de comp. 1 à comp. 11) et avec du polymère (A) (Ex.1 : 5-10% en mole de motifs (A2) ) puis on mesure leur perméabilité à l'eau à 38°C en g par m² pour 24 heures pour une épaisseur de film de 50 µm selon la norme ASTM E96E. Les résultats sont regroupés dans le **Tableau 1.**

**Tableau 1**

| | Matériau | Perméabilité à l'eau en g.50 µm/(m².24h) |
|---|---|---|
| Comp.1 | PVDC | 1.5 |
| Comp.2 | PEHD | 3 |
| Comp.3 | PP | 5 |
| Comp.4 | PEBD | 5 |
| Ex.1 | Polymère (A) | 6 |
| Comp.5 | PET | 16 |
| Comp.6 | PVC | 18 |
| Comp.7 | EVOH (38% en moles d'éthylène) | 20 |
| Comp.8 | PA 6 aromatique | 35 |
| Comp.9 | EVOH (32% en moles d'éthylène) | 35 |
| Comp.10 | PAN | 50 |
| Comp.11 | PA 6 | 85 |

Le polymère (A) donc le polydiméthylcétone est 3 à 6 fois plus imperméable que l'EVOH et du niveau des polyoléfines (PE et PP) qui servent à protéger habituellement l'EVOH dans les emballages.

L'absorption de l'eau est mesurée avec deux films de même épaisseur l'un en polymère (A), l'autre en EVOH (38% en moles d'éthylène) plongés dans de l'eau à 30°C. Le pourcentage d'eau à cette température est mesuré dans les deux cas. On a 0,1 % en poids d'eau dans le film en polymère (A) et 11,2 % dans celui en EVOH. Le polymère (A) donc le polydiméthylcétone absorbe donc 100 fois moins d'eau que l'EVOH.

Ces propriétés sont très intéressantes d'un point de vu industriel et notamment d'un point de vu applicatif et n'ont jusqu'à présent jamais été mises en évidence.

## Revendications

1. Utilisation d'une structure pour fabriquer des emballages alimentaires ou techniques fermés hermétiquement en contact direct avec un milieu aqueux ou humide, ladite structure comprenant au moins une couche d'un polymère (A) en contact direct avec le milieu le plus humide, (i) celui-ci se trouvant situé à l'intérieur de l'emballage lorsque ce dernier contient de l'eau ou un produit humide ou aqueux et (ii) le milieu le plus humide se trouvant situé à l'extérieur de l'emballage lorsque ce dernier contient un produit sec ou à protéger de l'humidité, le polymère (A) comprenant les motifs : 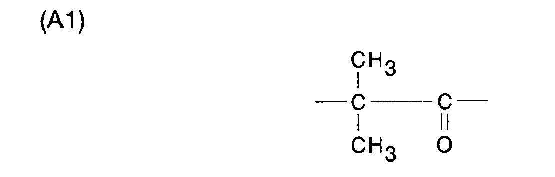 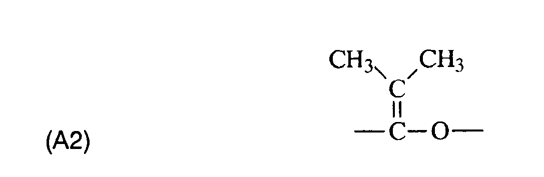 le rapport molaire A2 / (A1 +A2) étant compris entre 0 et 30 %.

2. Utilisation selon la revendication 1, le rapport molaire A2/(A1 +A2) étant compris entre 5 et 15 %.

3. Objet en contact direct avec un milieu aqueux ou humide, comprenant une structure comprenant au moins une couche d'un polymère (A) en contact direct avec le milieu le plus humide, (i) celui-ci se trouvant situé à l'intérieur de l'emballage lorsque ce dernier contient de l'eau ou un produit humide ou aqueux et (ii) le milieu le plus humide se trouvant situé à l'extérieur de l'emballage lorsque ce dernier contient un produit sec ou à protéger de l'humidité, le polymère (A) comprenant les motifs : 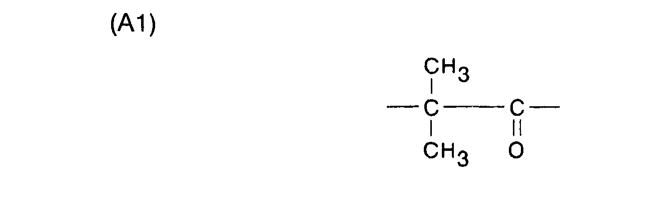 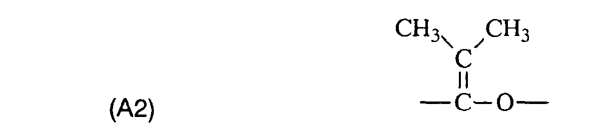 le rapport molaire A2 / (A1 +A2) étant compris entre 0 et 30 %.

4. Objet selon la revendication 3, **caractérisé en ce que** le rapport molaire A2 / (A1 +A2) est de préférence compris entre 5 et 15%.

5. Objet selon la revendication 3 ou 4 comprenant une structure multicouche comprenant en plus de la couche de polymère (A), au moins une couche d'un polymère (B), un liant pouvant être disposé entre les couches de polymères (A) et (B).

6. Objet selon l'une quelconque des revendications 3 à 5, **caractérisé en ce que** c'est un emballage alimentaire tel qu'une barquette, un sachet, une bouteille et une bonbonne ou un emballage technique tel qu'un tuyau, un conteneur et un fût.

## Claims

1. Use of a structure for manufacturing hermetically sealed industrial or food packaging in direct contact with a humid or aqueous medium, the said structure comprising at least one layer of a polymer (A) in direct contact with the most humid medium, (i) the latter being situated within the packaging when the packaging accommodates water or an aqueous or humid product and (ii) the most humid medium being situated outside the packaging when the packaging accommodates a product which is dry or which is to be protected from humidity, the polymer (A) comprising the following units: 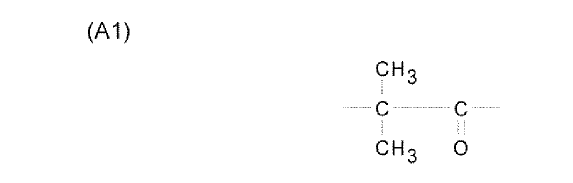 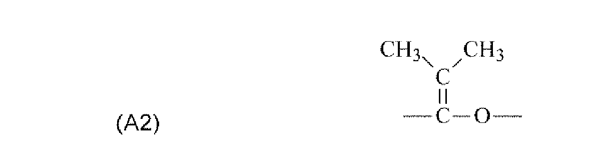 and the A2/(A1 + A2) molar ratio being between 0 and 30%.

2. Use according to Claim 1, the A2/(A1 + A2) molar ratio being between 5 and 15%.

3. Article in direct contact with a humid or aqueous medium, comprising a structure comprising at least one layer of a polymer (A) in direct contact with the most humid medium, (i) the latter being situated within the packaging when the packaging accommodates water or an aqueous or humid product and (ii) the most humid medium being situated outside the packaging when the packaging accommodates a product which is dry or which is to be protected from humidity, the polymer (A) comprising the following units: 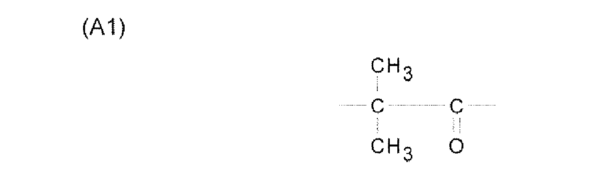 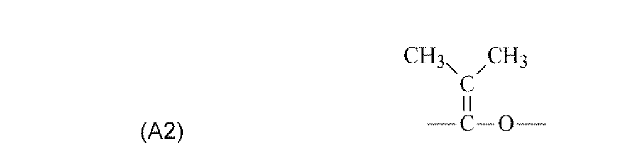 and the A2/(A1 + A2) molar ratio being between 0 and 30%.

4. Article according to Claim 3, **characterized in that** the A2/(A1 + A2) molar ratio is preferably between 5 and 15%.

5. Article according to Claim 3 or 4 comprising a multilayer structure comprising in addition to the layer of polymer (A) at least one layer of a polymer (B), it being possible for a tie to be between the layers of polymers (A) and (B).

6. Article according to any one of Claims 3 to 5, **characterized in that** it is a food packaging form such as a tray, a sachet, a bottle or a flask or an industrial packaging form such as a pipe, a container or a drum.

## Patentansprüche

1. Verwendung einer Struktur zur Herstellung von dicht verschlossenen Lebensmittelverpackungen oder technischen Verpackungen in direktem Kontakt mit einem wäßrigen oder feuchten Medium, wobei die Struktur mindestens eine Schicht aus einem Polymer (A) in direktem Kontakt mit dem feuchtesten Medium umfaßt, (i) wobei dieses sich innerhalb der Verpackung befindet, wenn letztere Wasser oder ein feuchtes oder wäßriges Produkt enthält, und (ii) das feuchteste Medium sich außerhalb der Verpackung befindet, wenn letztere ein trockenes oder vor Feuchtigkeit zu schützendes Produkt enthält, wobei das Polymer (A) Einheiten 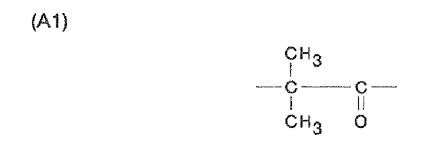 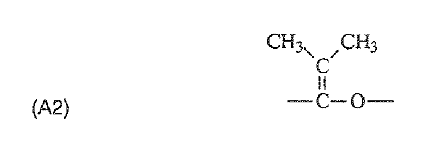 enthält und das Molverhältnis A2/(A1+A2) zwischen 0 und 30% liegt.

2. Verwendung nach Anspruch 1, wobei das Molverhältnis A2/(A1+A2) zwischen 5 und 15% liegt.

3. Gegenstand in direktem Kontakt mit einem wäßrigen oder feuchten Medium, umfassend eine Struktur, die mindestens eine Schicht aus einem Polymer (A) in direktem Kontakt mit dem feuchtesten Medium umfaßt, (i) wobei dieses sich innerhalb der Verpackung befindet, wenn letztere Wasser oder ein feuchtes oder wäßriges Produkt enthält, und (ii) das feuchteste Medium sich außerhalb der Verpackung befindet, wenn letztere ein trockenes oder vor Feuchtigkeit zu schützendes Produkt enthält, wobei das Polymer (A) Einheiten 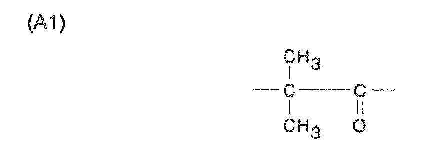 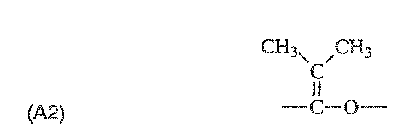 enthält und das Molverhältnis A2/(A1+A2) zwischen 0 und 30% liegt.

4. Gegenstand nach Anspruch 3, **dadurch gekennzeichnet, daß** das Molverhältnis A2/(A1+A2) vorzugsweise zwischen 5 und 15% liegt.

5. Gegenstand nach Anspruch 3 oder 4, umfassend eine Mehrschichtstruktur, die neben der Schicht aus Poylmer (A) mindestens eine Schicht aus einem Polymer (B) umfaßt, wobei zwischen den Schichten aus den Polymeren (A) und (B) ein Bindemittel angeordnet sein kann.

6. Gegenstand nach einem der Ansprüche 3 bis 5, **dadurch gekennzeichnet, daß** es sich um eine Lebensmittelverpackung wie eine Schale, einen Beutel, eine Flasche und eine Korbflasche oder eine technische Verpackung wie ein Rohr, einen Behälter und ein Faß handelt.
